# EUROPEAN PATENT SPECIFICATION

(11) **EP 4 006 429 B1**
(45) Date of publication and mention of the grant of the patent: **19.03.2025**
(21) Application number: 21211182.7
(22) Date of filing: 29.11.2021
(51) Int. Cl.: F24C 15/08

(54) **A COOKING APPLIANCE WITH A FLEXIBLE BRACKET**
EIN KOCHGERÄT MIT EINER FLEXIBLEN HALTERUNG
UN APPAREIL DE CUISSON AVEC UN SUPPORT FLEXIBLE

(30) Priority: 30.11.2020 US 202017106545
(43) Date of publication of application: 01.06.2022
(73) Proprietor: Beko Europe Management S.r.l., 20156 Milano (IT)
(72) Inventor: Auer, Alexander R., 21024 Cassinetta di Biandronno (VA) (IT); Gava, Flavio Silvio, 21024 Cassinetta di Biandronno (VA) (IT); Gotekar, Dhiraj Jambuvant, 21024 Cassinetta di Biandronno (VA) (IT); Mandal, Amit, 21024 Cassinetta di Biandronno (VA) (IT); Panchal, Manan, 21024 Cassinetta di Biandronno (VA) (IT)
(74) Representative: Buzzi, Notaro & Antonielli d'Oulx S.p.A.

(56) References cited:
- DE-U- 7 105 443
- US-A- 4 161 939
- US-A- 4 848 311
- US-A1- 2007 175 885

## Description

### BACKGROUND OF THE DISCLOSURE

The present disclosure generally relates to a bracket for a cooking appliance, and more specifically, to a flexible bracket configured to absorb the dimensional changes of a cooking vessel during a cooking procedure. Prior art can be found in the documents DE 71 05 443 U and US 4 161 939 A.

### SUMMARY OF THE DISCLOSURE

The invention is defined by the features of claim 1.

According to a first aspect of the present disclosure, a cooking appliance includes a support frame and a cooking vessel that is spaced-apart from the support frame to define a spacing therebetween. The cooking vessel is operable between at-rest and expanded conditions. An outer surface of the cooking vessel approaches the support frame when the cooking vessel moves from the at-rest condition to the expanded condition. A bracket interconnects the support frame and the cooking vessel. The bracket includes a first mounting member operably coupled to the cooking vessel and a second mounting member operably coupled to the support frame. At least one flexibly resilient connecting member interconnects the first and second mounting members and spans the spacing between the support frame and the cooking vessel.

According to another aspect of the present disclosure, a bracket for a cooking appliance includes a first mounting member spaced-apart from a second mounting member to define a gap therebetween. A first connecting member spans the gap between the first and second mounting members. The first connecting member includes a first portion coupled to the first mounting member, second portion coupled to the second mounting member, and an intermediate portion disposed therebetween. The first and second portions of the first connecting member are coupled to opposite ends of the intermediate portion at first and second deflection creases, respectively. A second connecting member spans the gap between the first and second mounting members and includes a first portion that is coupled to the first mounting member, a second portion coupled to the second mounting member, and an intermediate portion disposed therebetween. The first and second portions of the second connecting member are coupled to opposite ends of the intermediate portion at first and second deflection creases, respectively

According to yet another aspect of the present disclosure, a bracket for a cooking appliance includes a first mounting member and a second mounting member spaced-apart from the first mounting member to define a gap having a length disposed therebetween. At least one connecting member interconnects the first and second mounting members. The at least one connecting member includes at least one deflection crease and is operable between at-rest and loaded conditions. The length of the gap decreases as the at least one connecting member moves from the at-rest condition to the loaded condition.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a top perspective view of a bracket of the present concept;
FIG. 2 is a bottom perspective view of the bracket of FIG. 1;
FIG. 3 is a top perspective view of a bracket according to another embodiment of the present concept;
FIG. 4 is a side elevation view of the bracket of FIG. 1;
FIG. 5 is a side elevation view of the bracket FIG. 4 showing the bracket in a contracted position;
FIG. 6 is a side elevation view of the bracket of FIG. 3;
FIG. 7 is a side elevation view of the bracket FIG. 6 showing the bracket in a contracted position;
FIG. 8 is a front top perspective view of a cooking appliance and a support frame interconnected by the bracket of FIG. 1; and
FIG. 9 is a rear top perspective view of the cooking appliance of FIG. 8.

The components in the figures are not necessarily to scale, emphasis instead being placed upon illustrating the principles described herein.

### DETAILED DESCRIPTION

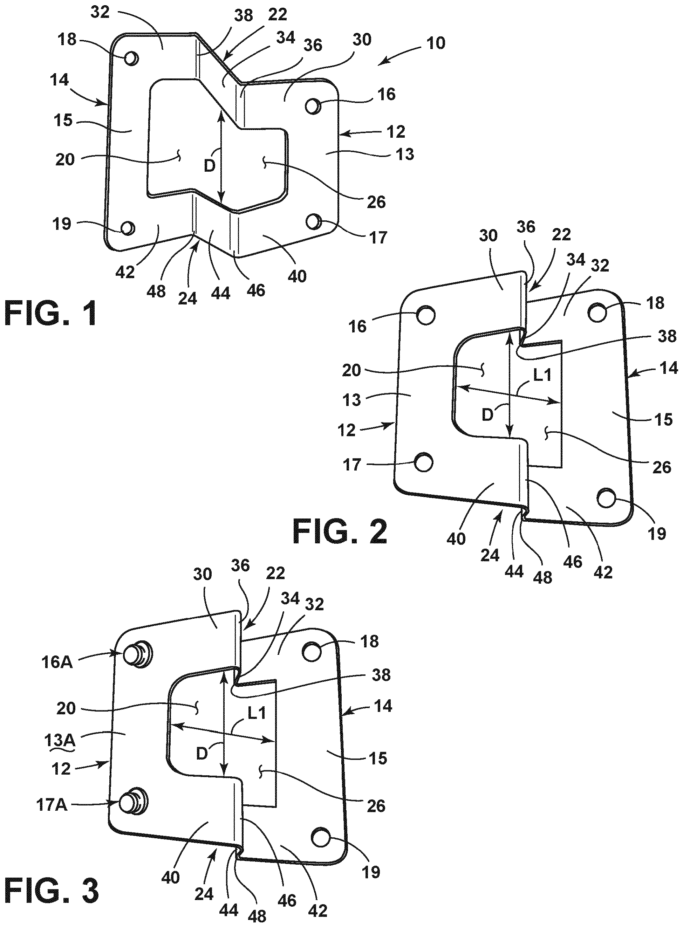

Referring now to FIGS. 1 and 2, a bracket 10 is shown having a first mounting member 12 and a second mounting member 14. The first mounting member 12 and the second mounting member 14 are spaced-apart from one another to define a gap 20 therebetween. Specifically, the first mounting member 12 is both vertically and horizontally offset from the second mounting member 14 by first and second connecting members 22, 24 which span the gap 20 to interconnect the first and second mounting members 12, 14, as further described below. The first mounting member 12 includes a generally planar body portion 13 having upper and lower mounting apertures 16, 17 disposed therethrough. Similarly, the second mounting member 14 includes a generally planar body portion 15 having upper and lower mounting apertures 18, 19 disposed therethrough.

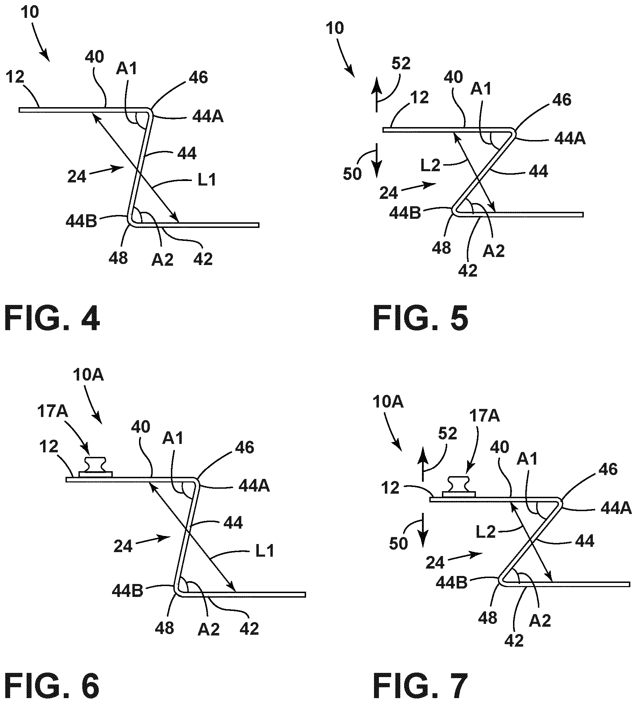

The first and second connecting members 22, 24 may be referred to herein as upper and lower connecting members. It is also contemplated that the bracket 10 may include more than two connecting members in various embodiments. In the embodiment shown in FIGS. 1 and 2, the first connecting member 22 includes a first portion 30 and a second portion 32 which are interconnected by an intermediate portion 34 at first and second deflection creases 36, 38, respectively. Similarly, the second connecting member 24 includes a first portion 40 and a second portion 42 which are interconnected by an intermediate portion 44 at first and second deflection creases 46, 48, respectively. In this way, the first and second connecting members 22, 24 are non-linear members which include a generally Z-shaped configuration in the illustrated embodiment. As used herein, the term "deflection crease" is meant to indicate a bend in a portion of the bracket 10, wherein an angle is provided therebetween. The bend provided by the first and second deflection creases 36, 38 and 46, 48 of the present concept directs the location of contraction of the bracket 10. Thus, the first and second connecting members 22, 24 are contemplated to be flexibly resilient members configured to flex at the first and second deflection creases 36, 38 and 46, 48, respectively. Specifically, the first and second connecting members 22, 24 are contemplated to inwardly flex at the respective first and second deflection creases 36, 38 and 46, 48, such that the first and second connecting members 22, 24 are operable between at-rest and loaded conditions. In this way, the bracket 10 is operable between at-rest and contracted positions, wherein the first and second mounting members 12, 14 approach one another to decrease a length L of the gap 20, as best shown in FIGS. 4 and 5, as the bracket 10 moves from the at-rest position to the contracted position and the first and second connecting members 22, 24 move from the at-rest condition to the loaded condition. In the embodiment shown in FIGS. 1 and 2, the first and second connecting members 22, 24 are vertically spaced-apart a distance D to define a thermal break 26 therebetween.

Referring now to FIG. 3, another embodiment of the bracket 10A is shown, wherein the upper and lower mounting apertures 16, 17 (FIGS. 1 and 2) of the first mounting member 12 have been replaced by upper and lower mounting bosses 16A, 17A. As shown in FIG. 3, the upper and lower mounting bosses 16A, 17A outwardly extend from an upper surface 13A of the planar body portion 13 of the first mounting member 12. It is contemplated that the upper and lower mounting bosses 16A, 17A may be received in reciprocal mounting apertures disposed on a cooking vessel, as further described below.

Referring now to FIG. 4, the bracket 10 is shown in the at-rest position, wherein the gap 20 defined between the first and second mounting members 12, 14 includes an at-rest length L1. Referring now to FIG. 5, the bracket 10 is shown in the contracted position, wherein the gap 20 defined between the first and second mounting members 12, 14 includes a contracted length L2. Thus, when the bracket 10 is in the contracted position, the length L of gap 20 decreases from the at-rest length L1 to the contracted length L2. Said differently, the length L of the gap 20 is greater when the bracket 10 is in the at-rest position as comparted to the contracted position. In this way, the bracket 10 is a flexible bracket which is contemplated to be biased towards the at-rest position shown in FIG. 4. The resiliency of the bracket 10 is provided by the first and second connecting members 22, 24, as the first and second connecting members 22, 24 are flexibly resilient between the at-rest and loaded conditions. In the loaded conditions, the first and second connecting members 22, 24 store a spring force that biases the bracket 10 to the at-rest position. The contraction of the bracket 10A is also shown in a similar manner in FIGS. 6 and 7.

With further reference to FIGS. 4 and 5, the bracket 10 is configured to flex or bend at the predetermined positions of the first and second deflection creases 36, 38 and 46, 48 of the first and second connecting members 22, 24. In the side elevation view of FIGS. 4 and 5, only the second connecting member 24 is shown, however, it is contemplated that the first connecting member 22 flexes in a similar manner as described below. As shown in FIGS. 4 and 5, the second connecting member 24 includes the intermediate portion 44 having opposed first and second ends 44A, 44B. The first deflection crease 46 interconnects the first portion 40 of the second connecting member 24 with the intermediate portion 44 of the second connecting member 24 at the first end 44A thereof. In this way, a first angle A1 is defined at the first deflection crease 46 between the first portion 40 and intermediate portion 44 of the second connecting member 24. The second deflection crease 48 interconnects the second portion 42 of the second connecting member 24 with the intermediate portion 44 of the second connecting member 24 at the second end 44B thereof. In this way, a second angle A2 is defined at the second deflection crease 48 between the second portion 42 and intermediate portion 44 of the second connecting member 24.

With specific reference to FIG. 4, the bracket 10 is shown in the at-rest position. In moving the bracket 10 from the at-rest position to the contracted position as the first and second connecting members 22, 24 move from the at-rest condition to the loaded condition, shown in FIG. 5, the first mounting member 12 of the bracket 10 moves in the direction as indicated by arrow 50 towards the second mounting member 14 to decrease the gap 20 therebetween. The first mounting member 12 moves towards the second mounting member 14 in response to an expansion force of a cooking cavity acting on the first mounting member 12, as further described below. As noted above, the bracket 10 is biased towards the at-rest position, such that the first mounting member 12 moves away from the second mounting member 14, and the direction as indicated by arrow 52, as the imparting force is lessoned or removed from the first mounting member 12. As the bracket 10 moves from the at-rest position, shown in FIG. 4, to the contracted position, shown in FIG. 5, the first and second angles A1, A2 decrease, thereby accounting for, or otherwise absorbing, the movement of the first mounting member 12. It is contemplated that the second mounting member 14 may be a stationary member as mounted to a support frame, as further described below.

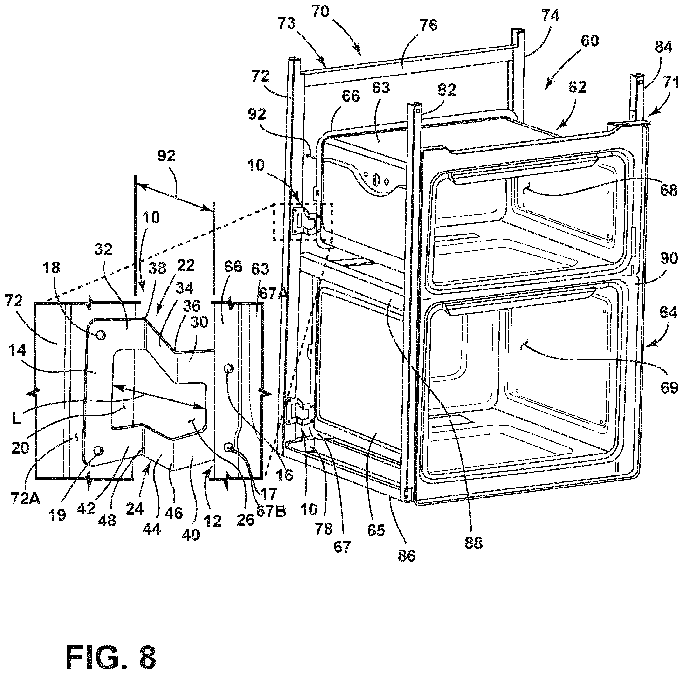

Referring now to FIG. 8, a cooking appliance 60 is shown having upper and lower cooking vessels 62, 64. It is contemplated that the cooking appliance 60 may include a dual oven configuration, or a microwave and oven combination. The upper cooking vessel 62 includes an outer surface 63 surrounding a cooking cavity 68. A rear mounting plate 66 is shown on a rear portion of the upper cooking vessel 62, and is contemplated to be part of the outer surface 63 of the upper cooking vessel 62. Similarly, the lower cooking vessel 64 includes an outer surface 65 that surrounds a cooking cavity 69. A rear mounting plate 67 is shown on a rear portion of the lower cooking vessel 64, and is contemplated to be part of the outer surface 65 of the lower cooking vessel 64. The cooking cavities 68, 69 of the respective cooking vessels 62, 64 are contemplated to be heated to desired cooking temperatures for cooking food item therein. As the cooking cavities 68, 69 are heated, the outer surfaces 63, 65 of the respective cooking vessels 62, 64 are contemplated to expand. Thus, the bracket 10 of the present concept is configured to absorb this expansion during a cooking procedure.

As specifically shown in FIG. 8, the cooking appliance 60 includes a support frame 70 having a front portion 71 and a rear portion 73. The rear portion 73 of the support frame 70 includes first and second frame members 72, 74 which are connected by upper and lower cross members 76, 78, in the embodiment of FIG. 8. The front portion 71 of the support frame 70 includes first and second frame members 82, 84 that may be interconnected to one another by any number of cross members. In the embodiment shown in FIG. 8, the front portion 71 of the support frame 70 is interconnected with the rear portion 73 of the support frame 70 by upper and lower interconnecting supports 86, 88. It is contemplated that the front and rear portions 71, 73 of the support frame 70 may be interconnected by any number of interconnecting support members as necessary to support the upper and lower cooking vessels 62, 64 of the cooking appliance 60.

In the embodiment shown in FIG. 8, it is contemplated that a front plate 90 interconnects the upper and lower cooking vessels 62, 64 with the front portion 71 of the support frame 70. It is contemplated that this is a rigid coupling between the front plate 90 and the support frame 70. Thus, as the upper and lower cooking vessels 62, 64 expand from an at-rest condition to an expanded condition during a cooking procedure, and contract from the expanded condition to the at-rest condition as the heat dissipates from the cooking procedure, the movement of the upper and lower cooking vessels 62, 64 is directed towards the rear portions of the upper and lower cooking vessels 62, 64 given the rigid coupling between the front plate 90 and the front portion 71 of the support frame 70. Thus, the rear portions of the upper and lower cooking vessels 62, 64 are operably coupled to the rear portion 73 of the support frame 70 by a number of brackets 10 of the present concept, in order to absorb the expansion and contraction of the upper and lower cooking vessels 62, 64. Specifically, the upper and lower cooking vessels 62, 64 are spaced-apart from the rear portion 73 of the support frame 70 to define a spacing 92 therebetween. The brackets 10 span the spacing 92 to interconnect the upper and lower cooking vessels 62, 64 with the rear portion 73 of the support frame 70. Specifically, the outer surfaces 63, 65 of the upper and lower cooking vessels 62, 64 approach the rear portion 73 of the support frame 70 when the upper and lower cooking vessels 62, 64 moves from the at-rest condition to the expanded condition during a cooking procedure to close the spacing 92 therebetween.

As specifically shown in the magnified portion of FIG. 8, the bracket 10 interconnects the outer surface 63 of the upper cooking vessel 62 with the first frame member 72 of the rear portion 73 of the support frame 70. Specifically, the first mounting member 12 of the bracket 10 is operably coupled to the rear mounting plate 66 of the upper cooking vessel 62 at the upper and lower mounting apertures 16, 17. Similarly, the second mounting member 14 of the bracket 10 is operably coupled to an outer surface 72A of the first frame member 72 of the support frame 70 at upper and lower mounting apertures 18, 19. It is contemplated that the bracket 10 may be fastened to the rear mounting plate 66 and the first frame member 72 using fasteners mounted to the respective upper and lower mounting apertures 16, 17 and 18, 19. It is also contemplated that the bracket 10 may be welded to the rear mounting plate 66 and the first frame member 72 at the respective upper and lower mounting apertures 16, 17 and 18, 19. In the magnified portion of FIG. 8, upper and lower mounting apertures 67A and 67B are shown disposed through the rear mounting plate 66 of the upper cooking vessel 62 and are aligned with the upper and lower mounting apertures 16, 17 of the first mounting member 12 of the bracket 10. In this way, the associated upper and lower mounting apertures 67A, 67B and 16, 17 are aligned to receive a fastener therebetween to rigidly interconnect the bracket 10 with the upper cooking vessel 62. With the bracket 10 interconnecting the upper cooking vessel 62 to the support frame 70, the first and second connecting members 22, 24 are configured to flex in response to the upper cooking vessel 62 moving between the at-rest and expanded conditions. Thus, as the upper cooking vessel 62 moves from the at-rest condition to the expanded condition, the first mounting member 12 of the bracket 10 will move towards the second mounting member 14 of the bracket 10 as the bracket 10 moves from the at-rest position to the contracted position. Movement of the bracket 10 from the at-rest position to the contracted position is accounted for at the first and second connecting members 22, 24 moving from the at-rest condition to the loaded condition.

As noted above, with reference to FIGS. 1 and 2, the first and second connecting members 22, 24 are vertically spaced-apart a distance D to define the thermal break 26. The thermal break 26 is provided between the first and second mounting members 12, 14, to reduce thermal conductivity between the cooking appliance 60 and the support frame 70 thereof. In this way, the thermal break 26 provides a window positioned between the first and second mounting members 12, 14 of the bracket 10 to decrease the overall thermal bridge that would be present in a bracket without such a thermal break 26.

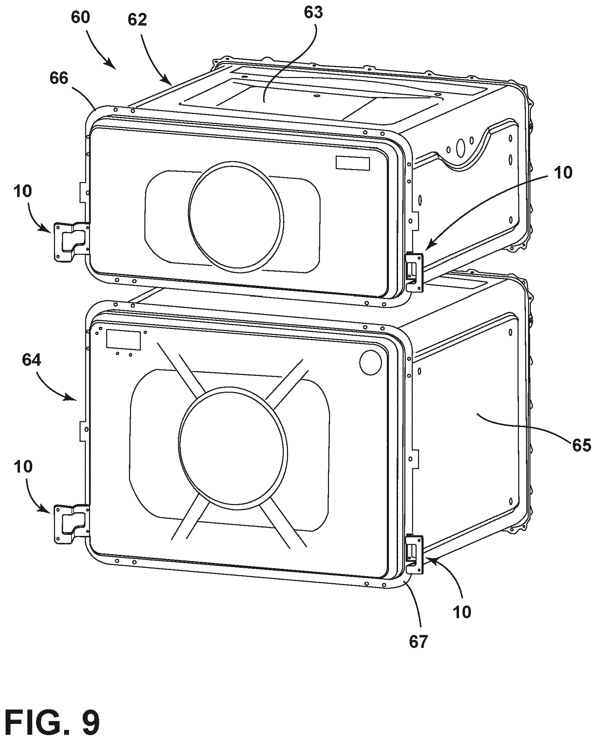

Referring now to FIG. 9, the cooking appliance 60 is shown from a rear perspective view with the support frame 70 removed. In the view of FIG. 9, the upper cooking vessel 62 is shown as having first and second brackets 10 disposed on opposite sides of the rear mounting plate 66. Similarly, the lower cooking vessel 64 is shown as having first and second brackets 10 disposed on opposite sides of the rear mounting plate 67. Thus, multiple brackets can be used to couple cooking vessels to a support frame as needed to properly support the cooking vessels on the support frame.

## Claims

1. A cooking appliance (60), comprising:
a support frame 70), having a front portion (71) and a rear portion (73), interconnected by interconnecting supports (86, 88);
a cooking vessel (62) rigidly coupled to the front portion (71) of the support frame (70) and spaced-apart from the rear portion (73) of the support frame (70) to define a spacing (92) therebetween, wherein the cooking vessel (62) is operable between at-rest and expanded conditions; and
a bracket (10) interconnecting the rear portion (73) of the support frame (70) and the cooking vessel (62), wherein the bracket (10) includes a first mounting member (12) operably coupled to the cooking vessel (62), a second mounting member (14) operably coupled to the rear portion (73) of the support frame (70) and at least one connecting member (22) interconnecting the first and second mounting members (12, 14), wherein the at least one connecting member (22) spans the spacing (92) between the rear portion (73) of the support frame (70) and the cooking vessel (62), and further wherein the at least one connecting member (22) is flexibly resilient and configured to flex in response to the cooking vessel (62) moving between the at-rest and expanded conditions,
**characterized in that** the at least one connecting member (22) includes first and second connecting members (22, 24), and wherein the first and second connecting members (22, 24) are vertically spaced-apart from one another to define a thermal break (26) therebetween, and wherein the first and second connecting members (22, 24) each include a Z-shaped configuration.

2. The cooking appliance (60) of claim 1, wherein an outer surface (63) of the cooking vessel (62) approaches the support frame (70) when the cooking vessel (62) moves from the at-rest condition to the expanded condition.

3. The cooking appliance (60) of any one of claims 1-2, wherein the at least one connecting member (22) is operable between at-rest and loaded conditions.

4. The cooking appliance (60) of claim 3, wherein the at least one connecting member (22) moves from the at-rest condition to the loaded condition as the cooking vessel (62) moves from the at-rest condition to the expanded condition.

5. The cooking appliance (60) of any one of claims 1-4, wherein the at least one connecting member (22) is a non-linear member and includes a first portion (30) and a second portion (32) with an intermediate portion (34) disposed therebetween.

6. The cooking appliance (60) of claim 5, wherein the first portion (30) and the second portion (32) of the at least one connecting member (22) are connected to opposite ends of the intermediate portion (34) at first and second deflection creases (36, 38).

7. The cooking appliance (60) of claim 6, wherein the at least one connecting member (22) is configured to flex at the first and second deflection creases (36, 38) in response to the cooking vessel (62) moving between the at-rest and expanded conditions.

8. The cooking appliance (60) of claim 3, wherein the first mounting member (12) moves towards the second mounting member (14) when the at least one connecting member (22) moves from the at-rest condition to the loaded condition.

9. The cooking appliance (60) of any one of claims 1-8, wherein the first and second mounting members (12, 14) each include generally planar body portions (13, 15) having mounting apertures (16, 17 and 18, 19) disposed therethrough.

10. The cooking appliance (60) of claim 3, wherein the first mounting member (12) and the second mounting member (14) are spaced-apart from one another to define a gap (20) therebetween.

11. The cooking appliance (60) of claim 10, wherein a length (L1) of the gap (20) is greater when the at least one connecting member (22) is in the at-rest condition than a length (L2) of the gap (20) when the at least one connecting member (22) is in the loaded condition, and further wherein the at least one connecting member (22) is biased towards the at-rest position.

## Patentansprüche

1. Kochgerät (60), umfassend:
einen Stützrahmen (70) mit einem vorderen Abschnitt (71) und einem hinteren Abschnitt (73), die durch Verbindungsstützen (86, 88) miteinander verbunden sind;
einen Kochbehälter (62), der starr mit dem vorderen Abschnitt (71) des Stützrahmens (70) gekoppelt und vom hinteren Abschnitt (73) des Stützrahmens (70) beabstandet ist, um einen Zwischenraum (92) dazwischen zu definieren, wobei der Kochbehälter (62) zwischen einem Ruhezustand und einem Ausdehnungszustand betreibbar ist; und
eine Halterung (10), die den hinteren Abschnitt (73) des Stützrahmens (70) und den Kochbehälter (62) miteinander verbindet,
wobei die Halterung (10) ein erstes Befestigungselement (12), das betriebsfähig mit dem Kochbehälter (62) gekoppelt ist, ein zweites Befestigungselement (14), das betriebsfähig mit dem hinteren Abschnitt (73) des Stützrahmens (70) gekoppelt ist, und mindestens ein Verbindungselement (22) umfasst, das das erste und das zweite Befestigungselement (12, 14) miteinander verbindet, wobei das mindestens eine Verbindungselement (22) den Zwischenraum (92) zwischen dem hinteren Abschnitt (73) des Stützrahmens (70) und dem Kochbehälter (62) überbrückt, und wobei ferner das mindestens eine Verbindungselement (22) flexibel elastisch ist und dazu ausgelegt ist, sich als Reaktion auf die Bewegung des Kochbehälters (62) zwischen dem Ruhezustand und dem Ausdehnungszustand zu biegen,
**dadurch gekennzeichnet, dass** das mindestens eine Verbindungselement (22) ein erstes und ein zweites Verbindungselement (22, 24) umfasst, und wobei das erste und das zweite Verbindungselement (22, 24) vertikal voneinander beabstandet sind, um eine thermische Trennung (26) dazwischen zu definieren, und wobei das erste und das zweite Verbindungselement (22, 24) jeweils eine Z-förmige Konfiguration aufweisen.

2. Kochgerät (60) nach Anspruch 1, wobei sich eine Außenfläche (63) des Kochbehälters (62) dem Stützrahmen (70) nähert, wenn sich der Kochbehälter (62) aus dem Ruhezustand in den Ausdehnungszustand bewegt.

3. Kochgerät (60) nach einem der Ansprüche 1-2, wobei das mindestens eine Verbindungselement (22) zwischen einem Ruhezustand und einem Belastungszustand betreibbar ist.

4. Kochgerät (60) nach Anspruch 3, wobei sich das mindestens eine Verbindungselement (22) aus dem Ruhezustand in den Belastungszustand bewegt, wenn sich der Kochbehälter (62) aus dem Ruhezustand in den Ausdehnungszustand bewegt.

5. Kochgerät (60) nach einem der Ansprüche 1-4, wobei das mindestens eine Verbindungselement (22) ein nichtlineares Element ist und einen ersten Abschnitt (30) und einen zweiten Abschnitt (32) mit einem dazwischen angeordneten Zwischenabschnitt (34) umfasst.

6. Kochgerät (60) nach Anspruch 5, wobei der erste Abschnitt (30) und der zweite Abschnitt (32) des mindestens einen Verbindungselements (22) an entgegengesetzten Enden des Zwischenabschnitts (34) an einem ersten und einem zweiten Biegeknick (36, 38) verbunden sind.

7. Kochgerät (60) nach Anspruch 6, wobei das mindestens eine Verbindungselement (22) dazu ausgelegt ist, sich an dem ersten und dem zweiten Biegeknick (36, 38) als Reaktion auf die Bewegung des Kochbehälters (62) zwischen dem Ruhezustand und dem Ausdehnungszustand zu biegen.

8. Kochgerät (60) nach Anspruch 3, wobei sich das erste Befestigungselement (12) auf das zweite Befestigungselement (14) zubewegt, wenn sich das mindestens eine Verbindungselement (22) aus dem Ruhezustand in den Belastungszustand bewegt.

9. Kochgerät (60) nach einem der Ansprüche 1-8, wobei das erste und das zweite Befestigungselement (12, 14) jeweils im Allgemeinen ebene Körperabschnitte (13, 15) mit darin angeordneten Befestigungsöffnungen (16, 17 und 18, 19) umfassen.

10. Kochgerät (60) nach Anspruch 3, wobei das erste Befestigungselement (12) und das zweite Befestigungselement (14) voneinander beabstandet sind, um einen Spalt (20) dazwischen zu definieren.

11. Kochgerät (60) nach Anspruch 10, wobei eine Länge (L1) des Spalts (20) größer ist, wenn sich das mindestens eine Verbindungselement (22) im Ruhezustand befindet, als eine Länge (L2) des Spalts (20), wenn sich das mindestens eine Verbindungselement (22) im Belastungszustand befindet, und wobei ferner das mindestens eine Verbindungselement (22) in Richtung der Ruheposition vorgespannt ist.

## Revendications

1. Appareil de cuisson (60), comprenant :
un cadre de support (70), ayant une partie avant (71) et une partie arrière (73), interconnectées par des supports d'interconnexion (86, 88) ;
un récipient de cuisson (62) couplé de manière rigide à la partie avant (71) du cadre de support (70) et espacé de la partie arrière (73) du cadre de support (70) pour définir un espacement (92) entre eux, dans lequel le récipient de cuisson (62) peut être utilisé entre des états de repos et étendu ; et
un support (10) interconnectant la partie arrière (73) du cadre de support (70) et le récipient de cuisson (62), dans lequel le support (10) comprend un premier élément de montage (12) couplé de manière opérationnelle au récipient de cuisson (62), un second élément de montage (14) couplé de manière opérationnelle à la partie arrière (73) du cadre de support (70) et au moins un élément de connexion (22) interconnectant les premier et second éléments de montage (12, 14), dans lequel l'au moins un élément de connexion (22) couvre l'espacement (92) entre la partie arrière (73) du cadre de support (70) et le récipient de cuisson (62), et en outre dans lequel l'au moins un élément de connexion (22) est élastique de manière flexible et configuré pour fléchir en réponse au déplacement du récipient de cuisson (62) entre les états de repos et étendu,
**caractérisé en ce que** l'au moins un élément de connexion (22) inclut des premier et second éléments de connexion (22, 24), et dans lequel les premier et second éléments de connexion (22, 24) sont espacés verticalement l'un de l'autre pour définir une rupture thermique (26) entre eux, et dans lequel les premier et second éléments de connexion (22, 24) incluent chacun une configuration en forme de Z.

2. Appareil de cuisson (60) selon la revendication 1, dans lequel une surface externe (63) du récipient de cuisson (62) s'approche du cadre de support (70) lorsque le récipient de cuisson (62) se déplace de l'état de repos à l'état étendu.

3. Appareil de cuisson (60) selon l'une quelconque des revendications 1 à 2, dans lequel l'au moins un élément de connexion (22) peut être utilisé entre des états de repos et chargé.

4. Appareil de cuisson (60) selon la revendication 3, dans lequel l'au moins un élément de connexion (22) se déplace de l'état de repos à l'état chargé lorsque le récipient de cuisson (62) se déplace de l'état de repos à l'état étendu.

5. Appareil de cuisson (60) selon l'une quelconque des revendications 1 à 4, dans lequel l'au moins un élément de connexion (22) est un élément non linéaire et inclut une première partie (30) et une seconde partie (32) avec une partie intermédiaire (34) disposée entre elles.

6. Appareil de cuisson (60) selon la revendication 5, dans lequel la première partie (30) et la seconde partie (32) de l'au moins un élément de connexion (22) sont reliées à des extrémités opposées de la partie intermédiaire (34) au niveau de premier et second plis de déviation (36, 38).

7. Appareil de cuisson (60) selon la revendication 6, dans lequel l'au moins un élément de connexion (22) est configuré pour fléchir au niveau des premier et second plis de déviation (36, 38) en réponse au déplacement du récipient de cuisson (62) entre les états de repos et étendu.

8. Appareil de cuisson (60) selon la revendication 3, dans lequel le premier élément de montage (12) se déplace vers le second élément de montage (14) lorsque l'au moins un élément de connexion (22) se déplace de l'état de repos à l'état chargé.

9. Appareil de cuisson (60) selon l'une quelconque des revendications 1 à 8, dans lequel les premier et second éléments de montage (12, 14) incluent chacun des parties de corps généralement planes (13, 15) ayant des ouvertures de montage (16, 17 et 18, 19) disposées à travers celles-ci.

10. Appareil de cuisson (60) selon la revendication 3, dans lequel le premier élément de montage (12) et le second élément de montage (14) sont espacés l'un de l'autre pour définir un écartement (20) entre eux.

11. Appareil de cuisson (60) selon la revendication 10, dans lequel une longueur (L1) de l'écartement (20) est supérieure lorsque l'au moins un élément de connexion (22) est dans l'état de repos à une longueur (L2) de l'écartement (20) lorsque l'au moins un élément de connexion (22) est dans l'état chargé, et en outre dans lequel l'au moins un élément de connexion (22) est sollicité vers la position de repos.
